Europäisches Patentamt

European Patent Office

Office européen des brevets

(19)

(11) **EP 1 370 342 B1**

(12) **EUROPÄISCHE PATENTSCHRIFT**

(45) Veröffentlichungstag und Bekanntmachung des Hinweises auf die Patenterteilung:
**02.11.2005 Patentblatt 2005/44**

(51) Int Cl.$^7$: **B01D 53/86**

(21) Anmeldenummer: 02727363.0

(22) Anmeldetag: **06.03.2002**

(86) Internationale Anmeldenummer:
**PCT/EP2002/002438**

(87) Internationale Veröffentlichungsnummer:
**WO 2002/087733 (07.11.2002 Gazette 2002/45)**

(54) **VERFAHREN ZUR VERRINGERUNG DES GEHALTS VON N2O UND NOX IN GASEN**

METHOD FOR REDUCING THE CONTENT OF N2O AND NOX IN GASES

PROCEDE PERMETTANT DE REDUIRE LA TENEUR EN N2O ET NOX DANS LES GAZ

(84) Benannte Vertragsstaaten:
**AT BE CH CY DE DK ES FI FR GB GR IE IT LI LU MC NL PT SE TR**

(30) Priorität: **13.03.2001 DE 10112444**

(43) Veröffentlichungstag der Anmeldung:
**17.12.2003 Patentblatt 2003/51**

(73) Patentinhaber: **Uhde GmbH**
**44141 Dortmund (DE)**

(72) Erfinder:
• **SCHWEFER, Meinhard**
**59872 Meschede (DE)**

• **MOTZ, Joachim**
**65779 Kelkheim (DE)**
• **SIEFERT, Rolf**
**33378 Rheda-Wiedenbrück (DE)**

(74) Vertreter: **Ackermann, Joachim**
**Postfach 11 13 26**
**60048 Frankfurt am Main (DE)**

(56) Entgegenhaltungen:
EP-A- 0 299 294          EP-A- 0 756 891
WO-A-00/48715            WO-A-01/51181
DE-A- 3 635 284          DE-A- 4 433 120
US-A- 4 046 888          US-A- 4 571 329
US-A- 5 482 692          US-A- 5 516 497

EP 1 370 342 B1

**Beschreibung**

Die vorliegende Erfindung betrifft ein Verfahren, womit der Gehalt von $N_2O$ und $NO_x$ in Gasen, insbesondere in Prozeßgasen oder in Abgasen reduziert oder ganz abgebaut werden kann.

Bei vielen Prozessen, wie z.B. Verbrennungsprozessen oder auch bei der industriellen Herstellung von Salpetersäure resultiert ein mit Stickstoffmonoxid NO, Stickstoffdioxid $NO_2$ (hier zusammen bezeichnet als $NO_x$) sowie Lachgas $N_2O$ beladenes Abgas. Während NO und $NO_2$ seit langem als Verbindungen mit ökotoxischer Relevanz bekannt sind (Saurer Regen, Smog-Bildung) und weltweit Grenzwerte für deren maximal zulässige Emissionen festgelegt sind, rückt in den letzten Jahren in zunehmenden Maße auch Lachgas in den Fokus des Umweltschutzes, da dieses in nicht unerheblichem Maße zum Abbau von stratosphärischem Ozon und zum Treibhauseffekt beiträgt. Es besteht daher aus Gründen des Umweltschutzes ein dringender Bedarf an technischen Lösungen, die Lachgasemissionen zusammen mit den $NO_x$-Emissionen zu verringern oder falls möglich ganz zu beseitigen.

Zur separaten Beseitigung von $N_2O$ einerseits und $NO_x$ andererseits sind bereits zahlreiche Möglichkeiten bekannt.

So finden sich zur $NO_x$-Minderung vornehmlich Verfahren zur katalytischen Reduktion von $NO_x$, die unter Verwendung verschiedenster Reduktionsmittel ablaufen, wobei vielfach Zeolith-Katalysatoren beschrieben werden. Neben Cuausgetauschten Zeolithen sind vor allem eisenhaltige Zeolithe für praktische Anwendungen von Interesse. Als Reduktionsmittel werden beispielsweise Ammoniak (vergl. US-A-5,451,387) oder auch Kohlenwasserstoffe (vergl. Feng, K. und W.K. Hall in Journal of Catalysis 166, S. 368-376 (1997)) eingesetzt.

Im Unterschied zur $NO_x$- Minderung in Abgasen, die seit vielen Jahren in der Technik etabliert ist, existieren zur $N_2O$-Beseitigung nur wenige technische Prozesse, die zumeist auf einen thermischen oder katalytischen Abbau des $N_2O$ abzielen. Eine Übersicht über die Katalysatoren, deren prinzipielle Eignung zum Abbau und zur Reduktion von Lachgas nachgewiesen wurde, gibt Kapteijn et al. (F. Kapteijn, et al., Appl. Cat. B: Environmental 9 (1996) 25-64).

Als besonders geeignet erscheinen wiederum Fe- und Cu-Zeolith-Katalysatoren, die entweder eine reine Zersetzung des $N_2O$ in $N_2$ und $O_2$ bewirken (US-A-5,171,553), oder auch zur katalytischen Reduktion des $N_2O$ mit Hilfe von z.B. $NH_3$ zu $N_2$ und $H_2O$ dienen.

So wird in JP-A-07 060 126 ein Katalysator zur Reduktion von $N_2O$ mit $NH_3$ in Gegenwart von eisenhaltigen Zeolithen vom Pentasil-Typ (MFI) beschrieben. Da technisch verwertbare Abbauraten erst bei Temperaturen >450°C erreicht werden, sind besondere Anforderungen an die thermische Stabilität des Katalysators gestellt.

Mauvezin et al. geben in Catal. Lett. 62 (1999) 41-44 eine Übersicht über die Eignung verschiedener, eisenausgetauschter Zeolithe vom Typ MOR, MFI, BEA, FER, FAU, MAZ und OFF zur Reduktion von $N_2O$ mit $NH_3$. Danach kann durch $NH_3$-Zugabe bei 450°C nur im Falle von Fe-BEA eine $N_2O$-Reduktion >70% erreicht werden.

Zur simultanen Beseitigung von $NO_x$ und $N_2O$, welche aus Gründen der Einfachheit und Wirtschaftlichkeit besonders erstrebenswert ist, finden sich in der Literatur ebenfalls verschiedene Verfahrensvarianten. Diese beschreiben immer die gemeinsame Reduktion von $NO_x$ und $N_2O$.

So beansprucht US-A-4,571,329 ein Verfahren zur Reduktion von $NO_x$ und $N_2O$ mittels Ammoniak in Gegenwart von Fe-substituierten Zeolith-Katalysatoren, die einerseits die Reaktion von $NH_3$ mit $NO_x$ zu $H_2O$ und $N_2$ und anderseits ebenfalls die Reaktion von $NH_3$ mit $N_2O$ zu $H_2O$ und $N_2$ katalysieren. Als geeignete Katalysatoren werden eisensubstituierte Zeolithe aus der Gruppe Mordenit, Clinoptilolit, Faujasit und Zeolith Y benannt. Das Verhältnis von $NH_3$ zu $NO_2$ beträgt mindestens 1,3.

WO-A-00/48715 beschreibt ein Verfahren, bei dem ein Abgas, welches $NO_x$ und $N_2O$ enthält, bei Temperaturen zwischen 200 und 600°C über einen Eisen-Zeolith-Katalysator vom Type Beta (=BEA) geleitet wird, wobei das Abgas außerdem $NH_3$ in einem Mengenverhältnis zwischen 0,7 und 1,4 bezogen auf die Gesamtmenge an $NO_x$ und $N_2O$ enthält. $NH_3$ dient hier ebenfalls als Reduktionsmittel sowohl für $NO_x$ als auch für $N_2O$. Das Verfahren arbeitet zwar als einstufiges Verfahren bei Temperaturen von kleiner als 450°C, besitzt aber wie die vorgenannten Verfahren den prinzipiellen Nachteil, dass zur Beseitigung des $N_2O$-Gehaltes eine zur Menge an $N_2O$ in etwa äquimolare Menge des Reduktionsmittels $NH_3$ benötigt wird.

In JP-A-51/03953 wird ein Verfahren zur Beseitigung von Stickoxiden, umfassend $N_2O$ und $NO_x$ beschrieben, bei welchem $N_2O$ und $NO_x$ gleichzeitig mit Kohlenwasserstoffen reduziert werden. Als Katalysator dient ein $\gamma$-$Al_2O_3$- oder Zeolith-Träger, auf welchem ein Metall aus der Gruppe Cu, Ag, Cr, Fe, Co, Ni, Ru, Rh oder Ir aufgetragen worden ist. Auch dieses Verfahren bedingt die Zugabe von Reduktionsmittel entsprechend der Gesamtmenge an $N_2O$ und $NO_x$.

Aufgabe der vorliegenden Erfindung ist die Bereitstellung eines einfachen, wirtschaftlichen Verfahren zum gleichzeitigen Abbau von $N_2O$ und $NO_x$ in Gegenwart eines einzigen Katalysatortyps, das sich durch eine möglichst niedrige Betriebstemperatur und durch einen minimalen Verbrauch an Reduktionsmittel auszeichnet.

Die Aufgabe wird durch das erfindungsgemäße Verfahren gelöst.

Gegenstand der vorliegenden Erfindung ist ein Verfahren zur Minderung des Gehalts von $NO_x$ und $N_2O$ in Gasen, insbesondere in Prozeßgasen und Abgasen, umfassend die Maßnahmen:

a) Zugabe eines unter Reaktionsbedingungen gasförmigen Reduktionsmittels für $NO_x$ zu dem $NO_x$ und $N_2O$ enthaltenden Gas in einer solchen Menge, wie zur Reduktion des $NO_x$ benötigt wird,

b) Einleiten des Gasgemisches in eine Vorrichtung mit einer Reaktionszone, die einen oder mehrere mit Eisen beladene Zeolithe enthält, deren Kristallstruktur keine Poren oder Kanäle von größer gleich 7 Angström aufweisen,

c) Einstellen einer Temperatur von bis zu 450°C in der Reaktionszone und Auswahl der Strömungsgeschwindigkeit des Gasgemisches und/oder der Katalysatormenge, so dass sich der gewünschte Zersetzungsgrad an $N_2O$ ergibt.

Zur Durchführung des erfindungsgemäßen Verfahrens wird das $N_2O$ und $NO_x$ enthaltende Gas zunächst mit einem gasförmigen Reduktionsmittel, vorzugsweise mit $NH_3$, gemischt und anschließend zum gleichzeitigen Abbau von $N_2O$ (durch Zersetzung) und $NO_x$ (durch Reduktion) bei einer Temperatur von weniger als 450°C mit der oben ausgewählten Raumgeschwindigkeit über den Katalysator geleitet.

Nach Merkmal a) des erfindungsgemäßen Verfahrens ist das Reduktionsmittel in einer solchen Menge zuzusetzen, wie zur Reduktion des $NO_x$ benötigt wird. Darunter wird im Rahmen dieser Beschreibung diejenige Menge an Reduktionsmittel verstanden, die notwendig ist, um den Anteil des $NO_x$ im Gasgemisch vollständig oder bis zur gewünschten Endkonzentration zu reduzieren, ohne dass eine merkliche Reduktion des $N_2O$ stattfindet. Für die Berechnung der Menge an Reduktionsmittel spielt der $N_2O$-Gehalt des Gasgemisches keine Rolle, da das Reduktionsmittel nahezu selektiv auf $NO_x$ wirkt.

Unter dem Begriff Raumgeschwindigkeit ist dabei der Quotient aus Volumenanteilen Gasgemisch pro Stunde bezogen auf einen Volumenanteil Katalysator zu verstehen. Die Raumgeschwindigkeit kann somit über die Strömungsgeschwindigkeit des Gases und/oder über die Katalysatormenge eingestellt werden.

Im allgemeinen beträgt die Temperatur des Gasgemisches in der Reaktionszone 250 bis 450°C, vorzugsweise 300 bis 450°C, insbesondere 350 bis 450°C.

Vorzugsweise erfolgen die Auswahl von Temperatur, Strömungsgeschwindigkeit und Katalysatormenge in Schritt c) derart, dass in der Reaktionszone mindestens 50 %, vorzugsweise mindestens 70% und ganz besonders bevorzugt mindestens 80% des $N_2O$ zersetzt werden.

Die Minderung des Gehalts von $NO_x$ und $N_2O$ erfolgt in Gegenwart eines einzigen Katalysatortyps, vorzugsweise eines einzigen Katalysators, welcher im wesentlichen einen oder mehrere mit Eisen beladene Zeolithe enthält.

Als Reduktionsmittel im Sinne der Erfindung können solche Stoffe eingesetzt werden, die eine hohe Aktivität und Selektivität zur Reduktion von $NO_2$ aufweisen und deren Selektivität und Aktivität unter den gewählten Reaktionsbedingungen größer ist als zur möglichen Reduktion von $N_2O$.

Als Reduktionsmittel im Sinne der Erfindung sind beispielsweise Kohlenwasserstoffe, Wasserstoff, Kohlenmonoxid, Ammoniak oder deren Gemische, wie z.B. Synthesegas, einsetzbar. Besonders bevorzugt wird Ammoniak.

Die zugesetzte Menge an Reduktionsmittel darf dabei nicht nennenswert größer sein, als zur Reduktion von $NO_x$ erforderlich ist. Im Falle von Ammoniak als Reduktionsmittel verwendet man - je nach dem gewünschten Grad des Abbaus des $NO_x$-Gehaltes - bis zu 1,33 (8/6) molare Anteile an Ammoniak, bezogen auf einen molaren Anteil an $NO_x$. Ist ein geringerer Abbaugrad von $NO_x$ gewünscht, so beträgt die Menge an molaren Anteilen von Ammoniak 1,33*y, bezogen auf einen molaren Anteil an $NO_x$; dabei ist y der prozentuale Anteil des $NO_x$ der in der Reduktion verbraucht werden soll. Das erforderliche molare Verhältnis von Reduktionsmittel zu $NO_x$ kann von den Reaktionsbedingungen abhängen. Es hat sich herausgestellt, dass bei steigendem Druck bzw. bei sinkenden Reaktionstemperaturen die für einen vollständigen Abbau des $NO_x$ erforderliche Menge an Reduktionsmittel sinkt. Im Fall von Ammoniak sinkt der molare Anteil von den oben erwähnten 1,33 molaren Anteilen auf 1,0 molare Anteile.

Als Katalysatoren finden eisenbeladene Zeolithe oder Mischungen von eisenbeladenen Zeolithen Verwendung, deren Kristallstruktur keine Poren bzw. Kanäle mit kristallographischen Durchmessern größer gleich 7,0 Ångstrom aufweist.

Es wurde überraschenderweise gefunden, daß über derartigen Katalysatoren in Gegenwart von $NO_x$ und einer entsprechenden Menge an Reduktionsmittel, die nicht größer ist als zur $NO_x$-Reduktion verbraucht wird, eine $N_2O$-Zersetzung schon bei Temperaturen <450° herbeigeführt werden kann.

Unter den vorliegenden Verfahrensbedingungen wirkt $NH_3$ nicht als Reduktionsmittel für $N_2O$, sondern reduziert selektiv das im Abgas enthaltene $NO_x$.

Ohne an theoretische Überlegungen gebunden zu sein, könnte folgende mechanistische Vorstellung den physikalisch-chemischen Hintergrund der Erfindung erklären:

Im ersten Schritt der $N_2O$-Zersetzung erfolgt die Abgabe eines Sauerstoffatoms an ein aktives Zentrum (symbolisiert durch *) des Eisen-Zeolith-Katalysators gemäß

$$N_2O + {}^* \rightarrow N_2 + O^* \qquad\qquad\qquad Gl.\ 1$$

Unter der Voraussetzung eines unbelegten aktiven Zentrums am Katalysator erfolgt diese Zersetzung von $N_2O$ schnell. Die zur Bildung von molekularem $O_2$ notwendige Entfernung des aktiven Sauerstoffatom ist gemäß

$$2\ O^* \rightarrow O_2 + 2^* \qquad\qquad Gl.\ 2$$

jedoch vergleichsweise langsam. Das heißt, wird die Reaktion nach Gl.2 beschleunigt, erfolgt auch ein schnellerer Abbau von $N_2O$.

Hierzu dient nun NO, welches nach

$$NO + O^* \leftrightarrow NO_2 + ^* \qquad\qquad Gl.\ 3$$

mit dem sorbierten $O^*$ reagiert.

Bei ausreichend hohen Temperaturen erfolgt in Gegenwart der erfindungsgemäß verwendeten Katalysatoren eine hinreichend schnelle Rückbildung des NO gemäß

$$2\ NO_2 \leftrightarrow 2\ NO + O_2 + ^* \qquad\qquad Gl.\ 4$$

Bei niederen Betriebstemperaturen, die im Sinne der Erfindung besonders bevorzugt sind, erfolgt die Einstellung des $NO/NO_2$ Gleichgewichts entsprechend langsam.

Eine Abreaktion der $O^*$ -Spezies ist durch einen Mangel an NO begrenzt.

Da es sich bei Gl. 3 um ein chemisches Gleichgewicht handelt, kann die Abreaktion von $O^*$ aber nicht nur durch Zufuhr von NO sondern auch durch Entfernen von $NO_2$ bewirkt werden. Dies wird erreicht durch Zugabe des gasförmigen Reduktionsmittels, wie $NH_3$, welches nach

$$6\ NO_2 + 8\ NH_3 \rightarrow 7\ N_2 + 12\ H_2O \qquad\qquad Gl.\ 5$$

selektiv auch bei niederen Temperaturen mit $NO_2$ zu $N_2$ und $H_2O$ reagiert.

Das heißt, die Gegenwart von $NO_x$ und Zugabe eines gasförmigen Reduktionsmittels, wie Ammoniak, beschleunigen den Abbau von $N_2O$, ohne daß hierfür Reduktionsäquivalente an $NH_3$ verbraucht werden. Die notwendige Menge an $NH_3$ ergibt sich in Gegenwart der erfindungsgemäß verwendeten Katalysatoren aus dem gewünschten Abbau an $NO_x$. Sie sollte jedoch dabei nicht nennenswert größer sein als zur Reduktion von $NO_x$ erforderlich, da überschüssiges $NH_3$ die Zersetzung von $N_2O$ blockiert und ggfs. bei erhöhten Temperaturen zur unerwünschten Reduktion des $N_2O$ mit $NH_3$ führt. Letzteres ist insbesondere dann der Fall, wenn Eisen-Zeolithe mit Poren oder Kanälen oberhalb von 7 Angström nicht erfindungsgemäß eingesetzt werden. Beispiele dafür sind Zeolithe vom Typ BEA.

Das erfindungsgemäße Verfahren ermöglicht es damit, sowohl die Zersetzung von $N_2O$ als auch die Reduktion von $NO_x$ bei einer einheitlich niedrigen Betriebstemperatur in einem einfachen Katalysatorbett mit geringem Verbrauch an gasförmigen Reduktionsmittel wie $NH_3$ durchzuführen, was mit den im Stand der Technik beschriebenen Verfahren bis dahin nicht möglich war.

Dieses ist insbesondere dann von großem Vorteil, wenn große Mengen an $N_2O$ beseitigt werden sollen.

Durch Verwendung von eisenhaltigen Zeolithen, vorzugsweise solchen vom FER-, MEL- und MFI-Typ, insbesondere Fe-ZSM-5, erfolgt der Abbau von $N_2O$ gemäß dem obigen Verfahren in Gegenwart von $NO_x$ bereits bei solchen Temperaturen bei denen eine Zersetzung von $N_2O$ ohne $NO_x$ und $NH_3$ überhaupt nicht stattfinden würde.

Die Ausführung des Katalysatorbettes ist im Sinne der Erfindung frei gestaltbar. Sie kann beispielsweise in Form eines Röhrenreaktors oder Radialkorbreaktors erfolgen. Auch die Art der Einbringung des gasförmigen Reduktionsmittels in den zu behandelnden Gasstrom ist im Sinne der Erfindung frei gestaltbar, solange dieses in Stromrichtung vor der Reaktionszone erfolgt. Sie kann zum Beispiel in der Eintrittsleitung vor dem Behälter für das Katalysatorbett oder unmittelbar vor dem Bett erfolgen. Das Reduktionsmittel kann in Form eines Gases oder auch einer Flüssigkeit bzw. wässrigen Lösung eingebracht werden, die im zu behandelnden Gasstrom verdampft.

Erfindungsgemäß verwendete Katalysatoren enthalten im wesentlichen, vorzugsweise > 50 Gew%, insbesondere > 70 Gew.% eines oder mehrerer mit Eisen beladener Zeolithe. So kann beispielsweise neben einem Fe-ZSM-5 Zeolith ein weiterer Eisen enthaltender Zeolith, wie z.B. ein eisenhaltiger Zeolith des MFI-, oder FER-Typs, in dem erfindungsgemäß verwendeten Katalysator enthalten sein.

Darüber hinaus kann der erfindungsgemäß verwendete Katalysator weitere dem Fachmann bekannte Zusatzstoffe, wie z.B. Bindemittel enthalten.

Erfindungsgemäß verwendete Katalysatoren basieren vorzugsweise auf Zeolithen, in die durch einen Festkörper-Ionenaustausch Eisen eingebracht wurde. Üblicherweise geht man hierfür von den kommerziell erhältlichen Ammonium-Zeolithen (z.B. $NH_4$-ZSM-5) und den entsprechenden Eisensalzen (z.B. $FeSO_4$ x 7 $H_2O$) aus und mischt diese auf mechanischem Wege intensiv miteinander in einer Kugelmühle bei Raumtemperatur. (Turek et al.; Appl. Catal. 184, (1999) 249-256; EP-A-0 955 080). Auf diese Literaturstellen wird hiermit ausdrücklich Bezug genommen. Die erhaltenen Katalysatorpulver werden anschließend in einem Kammerofen an der Luft bei Temperaturen im Bereich von 400 bis 600°C kalziniert. Nach dem Kalzinieren werden die eisenhaltigen Zeolithe in destilliertem Wasser intensiv gewaschen und nach Abfiltrieren des Zeolithen getrocknet. Abschließend werden die so erhaltenen eisenhaltigen Zeolithe mit den geeigneten Bindemitteln versetzt und gemischt und beispielsweise zu zylindrischen Katalysatorkörpern extrudiert. Als Bindemittel eignen sich alle üblicherweise verwendeten Binder, die gebräuchlichsten sind hierbei Aluminiumsilikate wie z.B. Kaolin.

Gemäß der vorliegenden Erfindung sind die verwendbaren Zeolithe mit Eisen beladen. Der Eisengehalt kann dabei bezogen auf die Masse an Zeolith bis zu 25% betragen, vorzugsweise jedoch 0,1 bis 10%. Die Kristallstruktur der Zeolithe weist keine Poren bzw. Kanäle mit kristallographischen Durchmessern größer gleich 7,0 Ängstrom auf.

Im erfindungsgemäßen Verfahren ist auch der Einsatz solcher Zeolithe eingeschlossen, in welchen das Gitteraluminiüm teilweise durch ein oder mehrere Elemente isomorph substituiert ist, beispielsweise durch ein oder mehrere Elemente ausgewählt aus B, Be, Ga, Fe, Cr, V, As, Sb und Bi ersetzt ist. Ebenso eingeschlossen ist der Einsatz von Zeolithen, bei denen das Gittersilicium durch ein oder mehrere Elemente isomorph substituiert ist, beispielsweise durch ein oder mehrere Elemente ausgewählt aus Ge, Ti, Zr und Hf ersetzt ist.

Genaue Angaben zum Aufbau oder Struktur der erfindungsgemäß eingesetzten Zeolithe werden im Atlas of Zeolite Structure Types, Elsevier, 4th revised Edition 1996, gegeben, auf den hiermit ausdrücklich Bezug genommen wird.

Erfindungsgemäß bevorzugte Zeolithe sind vom MFI (Pentasil)- oder FER (Ferrierit)-Typ. Insbesondere bevorzugt sind Zeolithe vom Fe-ZSM-5 Typ.

Ganz besonders bevorzugt kommen im erfindungsgemäßen Verfahren die weiter oben definierten Zeolith-Katalysatoren zum Einsatz, die mit Wasserdampf behandelt worden sind ("gesteamte" Katalysatoren). Durch eine derartige Behandlung wird das Gitter des Zeolithen dealuminiert; diese Behandlung ist dem Fachmann an sich bekannt. Überraschenderweise zeichnen sich diese hydrothermal behandelte Zeolith-Katalysatoren im erfindungsgemäßen Verfahren durch eine besonders hohe Aktivität aus.

Bevorzugt werden hydrothermal behandelte Zeolith-Katalysatoren eingesetzt, die mit Eisen beladen worden sind und bei denen das Verhältnis von Extra-Gitter-Aluminium zu Gitter-Aluminium mindestens 1 : 2 beträgt, vorzugsweise 1:2 bis 20:1 beträgt.

Die Betriebstemperatur des Katalysators, über welchem $N_2O$ und $NO_X$ beseitigt werden, liegt erfindungsgemäß <450°C, ganz besonders bevorzugt im Bereich von 350 bis 450°C.

Das mit Stickstoffoxiden beladene Gas wird üblicherweise mit einer Raumgeschwindigkeit von 200 bis 200.000 $h^{-1}$, vorzugsweise von 5.000 bis 100.000 $h^{-1}$, insbesondere von 5.000 bis 50.000 $h^{-1}$, und ganz besonders bevorzugt von 5.000 bis 30.000 $h^{-1}$, bezogen auf das Katalysatorvolumen, über den Katalysator geleitet.

Die Wahl der Betriebstemperatur ist dabei ebenso wie gewählte Raumgeschwindigkeit bestimmt durch den gewünschten Abbaugrad an $N_2O$.

Der gewünschte Abbau an $NO_X$ wird eingestellt durch die zugesetzte Menge an gasförmigem Reduktionsmittel, wie $NH_3$. Gemäß GI. 5 beträgt diese für Ammoniak vorzugsweise etwa 8/6 der abzubauenden Menge an $NO_X$, kann aber bei hohen Drucken bzw. niedrigen Temperaturen auch wie oben beschrieben kleinere Werte annehmen.

Das erfindungsgemäße Verfahren wird im allgemeinen bei einem Druck im Bereich von 1 bis 50 bar, vorzugsweise 1 bis 25 bar durchgeführt.

Die Einspeisung des Reduktionsmittels vor dem Katalysatorbett, erfolgt durch eine geeignete Vorrichtung, wie z.B. einem entsprechenden Druckventil oder entsprechend ausgestalteten Düsen.
Der Wassergehalt des Reaktionsgases liegt vorzugsweise im Bereich von <25 Vol.%, insbesondere im Bereich <15 Vol.%.

Im allgemeinen wird eine relativ niedrige Wasserkonzentration bevorzugt, da höhere Wassergehalte höhere Betriebstemperaturen erforderlich machen würden. Diese könnte je nach eingesetztem Zeolithtyp und Betriebsdauer die hydrothermalen Stabilitätsgrenzen des Katalysators überschreiten und ist somit dem jeweils gewählten Einzelfall anzupassen:

Auch die Anwesenheit von $CO_2$ sowie von anderen desaktivierenden Bestandteilen des Reaktionsgases, die dem Fachmann bekannt sind, sollten nach Möglichkeit minimiert werden, da sich diese negativ auf den $N_2O$-Abbau auswirken würden.

Das erfindungsgemäße Verfahren arbeitet auch in Gegenwart von $O_2$, da die erfindungsgemäß verwendeten Katalysatoren entsprechende Selektivitäten aufweisen, die bei Temperaturen <450°C eine Reaktion des gasförmigen

Reduktionsmittels, wie $NH_3$, mit $O_2$ unterdrücken.

All diese Einflußfaktoren, sowie die gewählte Katalysatorbelastung d.h. Raumgeschwindigkeit sind bei der Wahl der geeigneten Betriebstemperatur der Reaktionszone zu berücksichtigen.

Die mit dem vorliegenden Verfahren erzielbaren Umsätze für $N_2O$ und $NO_x$ liegen bei > 80%, vorzugsweise bei > 90%. Das Verfahren ist damit hinsichtlich seiner Leistungsfähigkeit, d.h. der erzielbaren Umsatzgrade des $N_2O$ und $NO_x$ Abbaus, sowie hinsichtlich der Betriebs- und Investitionskosten dem Stand der Technik überlegen.

Das erfindungsgemäße Verfahren kann besonders bei der Salpetersäureproduktion, bei Kraftwerksabgasen oder bei Gasturbinen zum Einsatz kommen. In diesen Prozessen fallen stickoxidhaltige Prozeß- und Abgase an, die mit Hilfe des hier aufgezeigten Verfahrens kostengünstig entstickt werden können.

Die Erfindung wird durch das nachfolgende Beispiel erläutert.

Als Katalysator wird ein mit Eisen beladener Zeolith vom Typ ZSM-5 eingesetzt.

Die Herstellung des Fe-ZSM-5-Katalysators erfolgte durch Festkörperlonentausch ausgehend von einem kommerziell verfügbaren Zeolith in Ammonium-Form (ALSI-PENTA, SM27). Detaillierte Angaben zur Präparation können entnommen werden aus: M. Rauscher, K. Kesore, R. Mönnig, W. Schwieger, A. Tißler, T. Turek: "Preparation of highly active Fe-ZSM-5 catalyst through solid state ion exchange for the catalytic decomposition of $N_2O$", in Appl. Catal. 184 (1999) 249-256.

Die Katalysatorpulver wurden an der Luft für 6h bei 823K kalziniert, gewaschen und über Nacht bei 383K getrocknet. Nach Zusatz entsprechender Binder folgte die Extrusion zu zylindrischen Katalysatorkörpern, welche zu einem Granulat mit einer Korngröße von 1-2 mm gebrochen wurden.

Als Vorrichtung zur Minderung des $NO_x$ und $N_2O$-Gehaltes kam ein Rohrreaktor zum Einsatz, welcher mit einer solchen Menge an obigem Katalysator befüllt war, dass bezogen auf den eintretenden Gasstrom ein Raumgeschwindigkeit von 10.000 $h^{-1}$ resultierte. Vor dem Reaktoreintritt erfolgte die Zugabe von $NH_3$-Gas. Die Betriebstemperatur des Reaktors wurde durch Beheizung eingestellt. Die Analyse des in die Vorrichtung ein- und austretenden Gasstroms erfolgte mit Hilfe eines FTIR-Gasanalysators.

Bei nachstehenden Eingangskonzentrationen und Betriebstemperaturen wurden die in Tabelle 1 wiedergegebenen Abbauraten an $N_2O$ und $NO_x$ erzielt:

**Beispiel 1**: 375°C (1 A), 400°C (1 B), 425°C (1 C)

Eingangskonzentrationen:
1000 ppm $N_2O$, 2500 ppm $H_2O$ und 2,5 %vol $O_2$ in $N_2$

**Beispiel 2**: 375°C (2A), 400°C (2B), 425°C (2C)

Eingangskonzentrationen:
1000 ppm $N_2O$, 1000 ppm $NO_x$, 2500 ppm $H_2O$, 2,5 %vol $O_2$ und 1200ppm $NH_3$ in $N_2$

Tabelle 1:

| Beispiel | Temperatur | $N_2O$-Abbau | $NO_x$-Abbau |
|----------|-----------|------------|------------|
| 1 A | 375°C | 4,5 % | - |
| 2 A | 375°C | 56,2 % | 89,9% |
| 1 B | 400°C | 14,7 % | - |
| 2 B | 400°C | 79,8 % | 91,5% |
| 1 C | 425°C | 33,7 % | - |
| 2 C | 425°C | 93,2 % | 91,9% |

Wie in den Beispielen belegt wird, führt die Anwesenheit von $NO_x$ und die Zugabe von Ammoniak zu einem drastischen Anstieg der $N_2O$-Zersetzung ohne dass $NH_3$ für die Reduktion von $N_2O$ verbraucht würde. Die erreichte $NO_x$-Reduktion von ca. 90% (ausgehend von 1000 ppm $NO_x$) entspricht im Rahmen der Messgenauigkeit der zugegebenen Menge an $NH_3$ (1200 ppm) dividiert durch das stöchiometrische Reaktionsverhältnis von 8/6 gemäß Gleichung 5. Demgegenüber ist der Grad der $N_2O$-Zersetzung ist bei gegebener $NO_x$ und $NH_3$-Konzentration nur abhängig von der Betriebstemperatur bzw. der eingestellten Raumgeschwindigkeit.

EP 1 370 342 B1

**Patentansprüche**

1. Verfahren zur Minderung des Gehalts von $NO_x$ und $N_2O$ in Gasen, insbesondere in Prozessgasen und Abgasen, umfassend die Maßnahmen:

   a) Zugabe von Ammoniak als unter Reaktionsbedingungen gasförmiges Reduktionsmittel für $NO_x$ zu dem $NO_x$ und $N_2O$ enthaltenden Gas in einer Menge von bis zu 1,33 (8/6) molaren Anteilen, bezogen auf die Menge an $NO_x$,
   b) Einleiten des Gasgemisches in eine Vorrichtung mit einer Reaktionszone, die einen oder mehrere mit Eisen beladene Zeolithe enthält, deren Kristallstruktur keine Poren oder Kanäle von größer gleich 7 Angström aufweisen,
   c) Einstellen einer Temperatur von bis zu 450°C in der Reaktionszone und Auswahl der Strömungsgeschwindigkeit des Gasgemisches und/oder der Katalysatormenge durch Leiten des $NO_x$ und $N_2O$ enthaltenden Gases mit einer Raumgeschwindigkeit von 5.000 bis 50.000 h$^{-1}$, bezogen auf das Katalysatorvolumen, über den Katalysator, so dass sich der gewünschte Zersetzungsgrad an $N_2O$ ergibt.

2. Verfahren nach Anspruch 1, **dadurch gekennzeichnet, dass** in Schritt c) eine solche Temperatur und eine Strömungsgeschwindigkeit des Gasgemisches eingestellt werden und/oder eine solche Katalysatormenge ausgewählt wird, dass in der Reaktionszone mindestens 50 %, vorzugsweise mindestens 70% und ganz besonders bevorzugt mindestens 80% des $N_2O$ zersetzt werden.

3. Verfahren nach Anspruch 1, **dadurch gekennzeichnet, dass** das $NO_x$ und $N_2O$ enthaltende Gas mit einer Raumgeschwindigkeit von 5.000 bis 30.000 h$^{-1}$, bezogen auf das Katalysatorvolumen, über den Katalysator geleitet wird.

4. Verfahren nach Anspruch 1, **dadurch gekennzeichnet, dass** die Temperatur in der Reaktionszone zwischen 350 bis 450°C liegt.

5. Verfahren nach Anspruch 1, **dadurch gekennzeichnet, dass** das Gas über einen einzigen Katalysator geleitet wird.

6. Verfahren nach Anspruch 1, **dadurch gekennzeichnet, dass** als Katalysatoren mit Eisen beladene Zeolithe der Typen MFI, FER und MEL eingesetzt werden.

7. Verfahren nach Anspruch 6, **dadurch gekennzeichnet, dass** als Katalysator ein mit Eisen beladener Zeolith des Typs MFI eingesetzt wird.

8. Verfahren nach Anspruch 7, **dadurch gekennzeichnet, dass** der mit Eisen beladene Zeolith des Typs MFI ein Katalysator des Typs Fe-ZSM-5 ist.

9. Verfahren nach Anspruch 1, **dadurch gekennzeichnet, dass** als Katalysatoren Zeolithe eingesetzt werden, die mit Wasserdampf behandelt worden sind.

10. Verfahren nach Anspruch 1, **dadurch gekennzeichnet, dass** als Katalysatoren mit Eisen beladene Zeolithe eingesetzt werden, bei denen das Verhältnis von Extra-Gitter-Aluminium zu Gitter-Aluminium mindestens 0,5 beträgt.

11. Verfahren nach Anspruch 1, **dadurch gekennzeichnet, dass** dieses in den Prozess der Salpetersäureproduktion integriert ist.

12. Verfahren nach Anspruch 1, **dadurch gekennzeichnet, dass** dieses in den Prozess des Betriebes einer Gasturbine integriert ist.

13. Verfahren nach Anspruch 1, **dadurch gekennzeichnet, dass** dieses in den Prozess des Betriebes eines Kraftwerks integriert ist.

**Claims**

1. Method of reducing the content of $NO_x$ and $N_2O$ in gases, in particular in process gases and offgases, which comprises the measures:

a) adding ammonia as a reducing agent which can reduce $NO_x$ and is gaseous under the reaction conditions to the $NO_x$- and $N_2O$-containing gas in an amount of up to 1.33 (8/6) mol per mol of $NO_x$,

b) introducing the gas mixture into an apparatus having a reaction zone containing one or more iron-laden zeolites whose crystal structure has no pores or channels having a width greater than or equal to 7 Ångström,

c) setting a temperature of up to 450°C in the reaction zone and selecting a flow rate of the gas mixture and/ or the amount of catalyst by passing the $NO_x$- and $N_2O$- containing gas over the catalyst at a space velocity of from 5000 to 50 000$h^{-1}$, based on the catalyst volume, so that the desired degree of decomposition of $N_2O$ is achieved.

2.  Method according to Claim 1, **characterized in that**, in step c), the temperature and flow rate of the gas mixture are set and/or the amount of catalyst is chosen so that at least 50%, preferably at least 70% and very particularly preferably at least 80%, of the $N_2O$ are decomposed in the reaction zone.

3.  Method according to Claim 1, **characterized in that** the $NO_x$- and $N_2O$-containing gas is passed over the catalyst at a space velocity of from 5 000 to 30 000 $h^{-1}$, based on the catalyst volume.

4.  Method according to Claim 1, **characterized in that** the temperature in the reaction zone is in the range from 350 to 450°C.

5.  Method according to Claim 1, **characterized in that** the gas is passed over a single catalyst.

6.  Method according to Claim 1, **characterized in that** iron-laden zeolites of the MFI, FER and MEL types are used as catalysts.

7.  Method according to Claim 6, **characterized in that** the catalyst used is an iron-laden zeolite of the MFI type.

8.  Method according to Claim 7, **characterized in that** the iron-laden zeolite of the MFI type is a catalyst of the Fe-ZSM-5 type.

9.  Method according to Claim 1, **characterized in that** zeolites which have been treated with steam are used as catalysts.

10. Method according to Claim 1, **characterized in that** iron-laden zeolites in which the ratio of extra-lattice aluminum to lattice aluminum is at least 0.5 are used as catalysts.

11. Method according to Claim 1, **characterized in that** it is integrated into the process for the production of nitric acid.

12. Method according to Claim 1, **characterized in that** it is integrated into the process of operating a gas turbine.

13. Method according to Claim 1, **characterized in that** it is integrated into the process of operating a power station.

**Revendications**

1.  Procédé pour diminuer la teneur de gaz en $NO_x$ et $N_2O$, en particulier de gaz de procédé et d'effluents gazeux, comprenant les étapes suivantes :

a) addition d'ammoniac, en tant que réducteur de $NO_x$, gazeux dans les conditions de la réaction, au gaz contenant le $NO_x$ et le $N_2O$, en une quantité allant jusqu'à 1,33 (8/6) parties en moles, par rapport à la quantité de $NO_x$,

b) introduction du mélange gazeux dans un dispositif comportant une zone de réaction qui contient une ou plusieurs zéolites chargées de fer, et dont la structure cristalline ne contient ni pores ni canaux supérieurs ou égaux à 7 Angstrôms,

c) ajustement de la température à une valeur allant jusqu'à 450°C dans la zone de réaction, et sélection de la vitesse d'écoulement du mélange gazeux et/ou de la quantité de catalyseur par passage, sur le catalyseur, du gaz contenant le $NO_x$ et le $N_2O$ à une vitesse spatiale de 5000 à 50 000 $h^{-1}$ rapportée au volume du catalyseur, de façon à arriver à la valeur souhaitée du degré de décomposition du $N_2O$.

2. Procédé selon la revendication 1, **caractérisé en ce que**, dans l'étape c), on ajuste une température et une vitesse d'écoulement du mélange gazeux et/ou on choisit une quantité de catalyseur telles qu'au moins 50 %, de préférence au moins 70 % et tout particulièrement au moins 80 % du $N_2O$ soient décomposés dans la zone de réaction.

3. Procédé selon la revendication 1, **caractérisé en ce que** le gaz contenant le $NO_x$ et le $N_2O$ est envoyé sur le catalyseur à une vitesse spatiale de 5000 à 30 000 $h^{-1}$, rapportée au volume de catalyseur.

4. Procédé selon la revendication 1, **caractérisé en ce que** la température dans la zone de réaction est comprise entre 350 et 450°C.

5. Procédé selon la revendication 1, **caractérisé en ce que** le gaz est envoyé sur un catalyseur unique.

6. Procédé selon la revendication 1, **caractérisé en ce qu'**on utilise en tant que catalyseurs des zéolites chargées de fer, des types MFI, FER et MEL.

7. Procédé selon la revendication 6, **caractérisé en ce qu'**on utilise en tant que catalyseur une zéolite chargée de fer, de type MFI.

8. Procédé selon la revendication 7, **caractérisé en ce que** la zéolite chargée de fer, du type MFI, est un catalyseur du type Fe-ZSM-5.

9. Procédé selon la revendication 1, **caractérisé en ce qu'**on utilise en tant que catalyseurs des zéolites qui ont été traitées par de la vapeur d'eau.

10. Procédé selon la revendication 1, **caractérisé en ce qu'**on utilise en tant que catalyseurs des zéolites chargées de fer, dans lesquelles le rapport de l'aluminium extraréticulaire à l'aluminium réticulaire est d'au moins 0, 5.

11. Procédé selon la revendication 1, **caractérisé en ce qu'**il est intégré dans le procédé de production de l'acide nitrique.

12. Procédé selon la revendication 1, **caractérisé en ce qu'**il est intégré dans le processus d'exploitation d'une turbine à gaz.

13. Procédé selon la revendication 1, **caractérisé en ce qu'**il est intégré dans le processus d'exploitation d'une centrale électrique.